# EUROPÄISCHE PATENTSCHRIFT

(11) **EP 4 063 301 B1**
(45) Veröffentlichungstag und Bekanntmachung des Hinweises auf die Patenterteilung: **11.11.2026**
(21) Anmeldenummer: 22163962.8
(22) Anmeldetag: 24.03.2022
(51) Int. Cl.: B65G 15/42, B65G 21/20

(54) **TEXTILMASCHINE MIT EINER FÖRDEREINHEIT ZUM FÖRDERN VOM TEXTILMATERIAL**
TEXTILE MACHINE WITH A CONVEYING UNIT FOR CONVEYING TEXTILE MATERIAL
MACHINE TEXTILE COMPRENANT UNE UNITÉ DE TRANSPORT PERMETTANT DE TRANSPORTER DES MATÉRIAUX TEXTILES

(30) Priorität: 26.03.2021 DE 102021107722
(43) Veröffentlichungstag der Anmeldung: 28.09.2022
(73) Patentinhaber: TEMAFA Maschinenfabrik GmbH, 51469 Bergisch Gladbach (DE)
(72) Erfinder: Morgner, Joerg, 51515 Kuerten (DE)
(74) Vertreter: Canzler & Bergmeier Patentanwälte Partnerschaft mbB

(56) Entgegenhaltungen:
- DE-U1- 29 918 166
- JP-B2- 3 578 256
- JP-U- H0 437 116
- US-A- 4 321 996
- US-A1- 2015 184 852
- US-A1- 2021 047 125

## Beschreibung

Die vorliegende Erfindung betrifft eine Textielmaschine mit einer Fördereinheit zum Fördern von Textilmaterial mit einem endlos umlaufenden und antreibbaren Förderelement, das an seiner Außenseite einen Förderbereich zum Fördern des Textilmaterials aufweist, mit zwei Seitenwänden, um das Textilmaterial in Querrichtung des Förderelements im Förderbereich zu halten, und mit zwei Abdichtvorrichtungen, die jeweils zwischen einer der beiden Seitenwände und dem Förderelement angeordnet sind, so dass ein vom Förderelement umschlossener Innenraum gegenüber dem Textilmaterial abgedichtet ist.

In der DE 10 2004 048 222 A1 ist ein Förderband zum Befördern eines Fasermaterials bekannt. Problematisch bei diesem Förderband ist, dass die Abdichtung zwischen dem Textilmaterial und den Umlenkrollen unzureichend ist.

In der US 2021/0047125 A1 ist eine Fördereinheit zum Fördern von Schüttgut, wie beispielsweise Sand, Pulver oder Glasstaub, offenbart.

In der US 4,321,996 A ist eine Fördereinheit zum Fördern von Futtermitteln offenbart.

In der US 2015/0184852 A1 ist eine Fördereinheit zum Fördern von Verbrennungsabfällen offenbart. Die US2015/0184852 offenbart eine Maschine mit einer Fördereinheit gemäß dem Oberbegriff des Anspruchs 1.

Aufgabe der vorliegenden Erfindung ist es somit, den Stand der Technik zu verbessern.

Die Aufgabe wird gelöst durch eine Textielmaschine mit den Merkmalen des unabhängigen Patentanspruchs.

Vorgeschlagen wird eine Textilmaschine mit einer Fördereinheit zum Fördern von Textilmaterial. Textilmaterialien können dabei auch Textilfasern sein, welche wiederum Kurz- und/oder Langfasern sein können. Die Textilfasern können ferner Naturfasern, Pflanzenfasern und/oder synthetische Fasern sein.

Die Fördereinheit der erfindungsgemäße Textielmaschine umfasst ein endlos umlaufendes und antreibbares Förderelement, das an seiner Außenseite einen Förderbereich zum Fördern des Textilmaterials aufweist. Im Förderbereich wird das Textilmaterial gefördert. Das Förderelement kann zusätzlich oder alternativ auch an seiner Außenseite einen Auflagebereich aufweisen, auf dem das Textilmaterial aufliegt. Der Förderbereich kann auch der Auflagebereich sein. Das Förderelement kann dadurch, dass es endlos umlaufend ausgebildet ist, kontinuierlich umlaufen und so stetig das Textilmaterial fördern.

Weiterhin umfasst die Fördereinheit der erfindungsgemäße Textielmaschine zwei Seitenwände, um das Textilmaterial in Querrichtung des Förderelements im Förderbereich zu halten. Mit Hilfe der Seitenwände kann beispielsweise verhindert werden, dass das Textilmaterial vom Förderelement fällt.

Außerdem umfasst die Fördereinheit der erfindungsgemäße Textielmaschine zwei Abdichtvorrichtungen, die jeweils zwischen einer der beiden Seitenwände und dem Förderelement angeordnet sind, so dass ein vom Förderelement umschlossener Innenraum gegenüber dem Textilmaterial abgedichtet ist. Da das Textilmaterial aus Textilfasern bestehen kann, können sich diese in der Umgebung und im Innenraum ablagern. Mit Hilfe der Abdichtvorrichtung kann dies verhindert werden. Mittels der Abdichtvorrichtung kann erreicht werden, dass das Textilmaterial bzw. die Textilfasern im Förderbereich bleiben. Des Weiteren kann es beim Fördern des Textilmaterials zu einer Staubbildung kommen, wobei der Staub im Wesentlichen aus dem Textilmaterial besteht oder vom Textilmaterial mitgeführt wird. Mit Hilfe der Abdichtvorrichtungen kann somit auch verhindert werden, dass der Staub in den Innenraum des Förderelements gelangt.

Ferner weist zumindest eine Abdichtvorrichtung ein mit dem Förderelement verbundenes Abdichtelement auf, das sich von der Außenseite des Förderelements wegerstreckt, so dass es sich gegenüber dem Förderbereich und/oder dem Auflagebereich erhebt. Da das Abdichtelement mit dem Förderelement verbunden ist, bewegt es sich mit dem Förderelement mit. Eine Relativbewegung zwischen Förderelement und dem Abdichtelement wird somit vermieden. Außerdem ist auch eine Relativbewegung zwischen dem Abdichtelement und dem Textilmaterial vermieden. Infolgedessen wird mit hoher Zuverlässigkeit vermieden, dass das Textilmaterial in die Umgebung des Förderbereichs und in den Innenraum gelangt. Da sich das Abdichtelement vom Förderelement weg erstreckt, bilden diese die Form einer Begrenzung. Da zumindest eine Abdichtvorrichtung ein Abdichtelement aufweist, umfasst die Fördereinheit zumindest ein Abdichtelement.

Des Weiteren kann die zumindest eine Abdichtvorrichtung zumindest ein Abdichtelement aufweisen. Beispielsweise kann die zumindest eine Abdichtvorrichtung mehrere Abdichtelemente aufweisen, welche beispielsweise in Querrichtung voneinander beabstandet sind.

Vorteilhaft ist es, wenn sich das zumindest eine Abdichtelement vom Förderelement weg und sich zumindest teilweise in Umfangsrichtung um das Förderelement erstreckt. Dadurch kann der Förderbereich stets abgedichtet werden.

Vorteilhafterweise umfasst die Fördereinheit zumindest zwei im Innenraum angeordnete Umlenkelemente zum Tragen und Umlenken des Förderelements. Die beiden Umlenkelemente können in einer Förderrichtung des Textilmaterials voneinander beabstandet sein. Die Umlenkelemente sind beispielsweise Umlenkrollen. Zusätzlich oder alternativ kann die Fördereinheit einen Antrieb aufweisen, mittels dem das Förderelement angetrieben werden kann.

Die zumindest eine Abdichtvorrichtung weist ein der benachbarten Seitenwand zugeordnetes Dachelement auf, das ein freies Ende des Abdichtelements abdeckt. Somit umfasst die Fördereinheit auch zumindest ein Dachelement. Außerdem ist das zumindest eine Dachelement dem zumindest eine Abdichtelement zugeordnet. Mit Hilfe des zumindest einen Dachelements kann verhindert werden, dass das Textilmaterial direkt auf das zumindest eine Abdichtelement gelangt. Ferner kann die zumindest eine Abdichtvorrichtung zumindest ein der benachbarten Seitenwand zugeordnetes Dachelement aufweisen. Die zumindest eine Abdichtvorrichtung kann somit auch mehrere Dachelement aufweisen.

Erfindungsgemäß erstreckt sich das Dachelement in Querrichtung des Förderbandes.

Das Dachelement erstreckt sich von der Seitenwand ausgehend und schräg in Querrichtung des Förderelements. Auch dadurch wird verhindert, dass sich das Textilmaterial auf dem zumindest einen Abdichtelement ablagert bzw. auf dieses fallen kann.

Von Vorteil ist es, wenn das zumindest eine Dachelement einem Seitenbereich des Förderelements zugeordnet ist, wobei das Dachelement das Abdichtelement zum Förderbereich hin, insbesondere in Querrichtung, überragt. Dadurch wird verhindert, dass das Textilmaterial auf das zumindest eine Abdichtelement bzw. in den Seitenbereich des Förderelements gelangt.

Erfindungsgemäß ist das zumindest eine Dachelement an der Seitenwand angeordnet.

Infolgedessen bildet das zumindest eine Dachelement mit der Seitenwand eine Begrenzung.

Von Vorteil ist es, wenn ein freies Dachende des zumindest einen Dachelements, insbesondere in Querrichtung, vom Abdichtelement beabstandet ist. Zusätzlich oder alternativ kann auch das Dachelement über dem Abdichtelement angeordnet sein. Dadurch deckt das zumindest eine Dachelement das Abdichtelement ab. Das freie Dachende ist eine Dachtraufe, welche das Abdichtelement überragt, so dass das Textilmaterial nicht auf das Abdichtelement gelangen kann.

Vorteilhaft ist es, wenn ein kürzester Abstand zwischen dem freien Dachende und dem Förderelement geringer ist als ein kürzester Abstand zwischen dem freien Ende des Abdichtelements und dem Förderelement. Dadurch kann nur wenig Textilmaterial auf das Abdichtelement gelangen.

Das zumindest eine Dachelement weist eine Dachfläche auf, die das zumindest eine Abdichtelement überdeckt. Die Dachfläche des Dachelements ist geneigt, so dass das auf das zumindest eine Dachelement abgeworfene Textilmaterial in Richtung Förderbereich rutschen kann. Die Dachfläche kann dabei eben, konkav und/oder konvex sein.

Vorteilhaft ist es, wenn das zumindest eine Abdichtelement in einem Seitenbereich des Förderelements angeordnet ist. Dadurch kann der Förderbereich, der zwischen den Abdichtelementen angeordnet ist, so groß wie möglich ausgebildet werden.

Vorteilhaft ist es, wenn sich die Abdichtelemente senkrecht von dem Förderelement weg erstrecken. Alternativ kann sich das zumindest eine Abdichtelement auch schräg, insbesondere zum Förderbereich hin oder von diesem weg, vom Förderelement weg erstrecken. Das zumindest eine Abdichtelement ist somit geneigt, beispielsweise zum Förderbereich hin oder von diesem weg, angeordnet. Zusätzlich oder alternativ kann das zumindest eine Abdichtelement auch trapezförmig ausgebildet sein und sich vom Förderelemente weg erstrecken. Zusätzlich oder alternativ kann das zumindest eine Abdichtelement auch die Form eines Parallelogramms aufweisen.

Von Vorteil ist es, wenn die Fördereinheit ein die Seitenwände umfassendes Gehäuse aufweist, in welchem zumindest das Förderelement angeordnet ist. Mittels dem Gehäuse kann ebenfalls des Textilmaterial gegenüber der Umgebung abgegrenzt werden.

Das zumindest eine Dachelement weist zumindest eine dem freien Ende des Abdichtelements gegenüber zugewandte Abdichtfläche auf, die zusammen mit dem Abdichtelement den Förderbereich gegenüber dem Innenraum abdichtet. Zusätzlich kann das zumindest eine Dachelement auch zumindest eine Abdichtkante aufweisen, die zusammen mit dem Abdichtelement den Förderbereich gegenüber dem Innenraum abdichtet. Die Abdichtkante kann dabei das freie Ende des Abdichtelements abdecken und/oder überragen. Um vom Förderbereich in den Innenraum zu gelangen, muss das Textilmaterial zwischen dem zumindest einen Dachelement und der zumindest einen Abdichtfläche und/oder der zumindest einen Abdichtkante hindurch. Durch die Anordnung des freien Endes des Abdichtelements zur Abdichtfläche und/oder zur Abdichtkante wird dies verhindert.

Vorteilhaft ist es, wenn das zumindest eine Dachelement eine innere Gegenfläche aufweist, die einer dem Förderbereich zugewandten inneren Seitenfläche des Abdichtelements gegenüber zugewandt ist.

Zusätzlich oder alternativ kann das zumindest eine Dachelement eine äußere Gegenfläche aufweisen, die einer dem Förderbereich abgewandten äußeren Seitenfläche des Abdichtelements gegenüber zugewandt ist. Mittels der inneren und/oder äußeren Gegenfläche kann die Abdichtung verbessert werden, weil das Textilmaterial zwischen den entsprechenden Flächen hindurch muss, um zum Innenraum zu gelangen.

Von Vorteil ist es, wenn das zumindest eine Abdichtelement ein inneres Gegenelement aufweist, wobei das innere Gegenelement die innere Gegenfläche umfasst. Zusätzlich oder alternativ kann das zumindest eine Abdichtelement ein äußeres Gegenelement aufweisen, wobei das äußere Gegenelement die äußere Gegenfläche aufweist. Mittels den Gegenelementen kann die Gegenfläche ausgebildet werden. Ferner bilden die Gegenelemente ein Hindernis für das Textilmaterial.

Vorteilhaft ist es, wenn die Abdichtfläche, die innere und/oder die äußere Gegenfläche in einer Aussparung im zumindest einen Dachelement angeordnet sind. Die Aussparung kann auf einfache Weise im zumindest einen Dachelement ausgebildet werden.

Von Vorteil ist es, wenn das zumindest eine Abdichtelement und das zumindest eine Dachelement eine Labyrinthdichtung bilden. Dadurch kann die Abdichtung verbessert werden. Vorteilhaft ist es, wenn das zumindest eine Abdichtelement und das zumindest eine Dachelement zueinander berührungsfrei angeordnet sind, so dass ein Verschleiß zwischen den sich gegenüber den Gegenelementen bewegenden Abdichtelementen vermieden wird. Durch die Labyrinthdichtung muss das Textilmaterial einen mäanderförmigen Weg zum Innenraum zurücklegen, was jedoch dadurch verhindert wird.

Von Vorteil ist es, wenn zwischen dem zumindest einen Abdichtelement und dem zumindest einen Dachelement ein Spalt angeordnet ist. Dadurch können das zumindest eine Abdichtelement und das zumindest eine Dachelement berührungsfrei bewegt werden.

Vorteilhaft ist es, wenn das zumindest eine Abdichtelement und das zumindest eine Dachelement zueinander beabstandet sind. Dadurch kann das zumindest eine Abdichtelement zu dem zumindest einen Dachelement berührungsfrei bewegt werden.

Von Vorteil ist es, wenn das zumindest eine Abdichtelement zumindest teilweise, insbesondere vollständig, aus Richtung des freien Endes geschlitzt ist. Dabei kann das zumindest eine Abdichtelement in Querrichtung des Förderelements geschlitzt sein. Zusätzlich oder alternativ kann das zumindest eine Abdichtelement auch schräg geschlitzt sein. Da das zumindest eine Abdichtelement auf dem Förderelement angeordnet ist bzw. mit diesem verbunden ist, wird das zumindest eine Abdichtelement in Umlenkbereichen bzw. im Bereich der Umlenkeinheiten ebenfalls umgelenkt. Durch den erhöhten Radius, welchen das zumindest eine Abdichtelement durchlaufen muss, kann es sich durch die Schlitze im Bereich der Umlenkung aufspreizen ohne dass das zumindest eine Abdichtelement durch die Belastung beim Umlenken reißt. Die Schlitze im zumindest einen Abdichtelement sind beispielsweise dann vorteilhaft, wenn eine Höhe des Abdichtelements größer ist als 8 mm.

Vorteilhaft ist es, wenn das zumindest eine Abdichtelement elastisch ausgebildet ist. Auch dadurch kann sich das zumindest eine Abdichtelement im Umlenkbereich dehnen, um die Umlenkbereiche ohne Beschädigung zu durchlaufen.

Vorteilhaft ist es, wenn das zumindest eine Abdichtelement wellenförmig und/oder fächerförmig ausgebildet ist. Wenn sich das zumindest eine Abdichtelement im Umlenkbereich dehnt, kann sich das zumindest eine Abdichtelement auffächern, so dass das zumindest eine Abdichtelement ohne Belastung die Umlenkung durchlaufen kann. Ist der Umlenkbereich durchlaufen, schiebt sich das wellenförmige und/oder fächerförmige Abdichtelement wieder zusammen.

Von Vorteil ist es, wenn das zumindest eine Abdichtelement einteilig mit dem Förderelement ausgebildet ist. Alternativ kann das zumindest eine Abdichtelement auch, insbesondere kraft-, form- und/oder stoffschlüssig, mit dem Förderelement verbunden sein. Beispielsweise kann das zumindest eine Abdichtelement auf das Förderelement geklebt oder vulkanisiert sein. Ferner kann das zumindest eine Abdichtelement auch auf das Förderelement geschraubt sein.

Vorteilhaft ist es, wenn das zumindest eine Abdichtelement eine Höhe über dem Förderelement bzw. dem Förderbereich zwischen 0,5 mm und 5 cm aufweist.

Von Vorteil ist es, wenn das zumindest eine Abdichtelement als Erhebung und/oder als umlaufende Rippe ausgebildet ist.

Vorteilhaft ist es, wenn das Förderelement schräg zu einer horizontalen Richtung angeordnet ist. Infolgedessen kann Textilmaterial auch über eine Höhe, also nach oben oder unten, gefördert werden.

Von Vorteil ist es, wenn das Förderelement ein Fördergurt, eine Förderkette und/oder ein Gliederförderband ist.

Von Vorteil ist es, wenn beide Abdichtvorrichtungen jeweils zumindest ein Abdichtelement aufweisen. Zusätzlich oder alternativ können auch beide Abdichtvorrichtungen jeweils zumindest ein Dachelement aufweisen. Zwar ist es in der Beschreibung hauptsächlich so beschrieben, dass zumindest eine Abdichtvorrichtung ein Abdichtelement und/oder ein Dachelement aufweist, jedoch kann es vorteilhaft sein, wenn beide Abdichtvorrichtungen jeweils zumindest ein Abdichtelement und/oder zumindest ein Dachelement aufweisen. Dabei können die beiden Abdichtvorrichtungen und das zumindest eine Abdichtelement und/oder das zumindest eine Dachelement prinzipiell gleich zueinander ausgebildet sein. Alternativ können sich das zumindest eine Abdichtelement und/oder das zumindest eine Dachelement der beiden Abdichtvorrichtungen auch unterscheiden, wenn beispielsweise eine der beiden Abdichtvorrichtungen mehr Textilmaterial ausgesetzt ist als die andere Abdichtvorrichtung.

Vorteilhaft ist es, wenn das Förderelement Bearbeitungselemente für das Textilmaterial, insbesondere Zähne zum Auflösen eines Textilballens, aufweist. Das Förderelement kann beispielsweise ein Nadelband sein, welches die Zähne oder Nadeln aufweist, um das Textilmaterial zu zerreißen. Mit Hilfe des Förderelements kann das Textilmaterial nicht nur gefördert werden, sondern auch bearbeitet werden. Beispielsweise kann es sich bei der Fördereinheit auch um einen Ballenöffner handeln. Das Textilmaterial kann nämlich als Ballen vorliegen, welche vom sich vorbei bewegenden Förderelement, welches Zähne oder Nadeln aufweist, zerrupft, also aufgelöst, und gefördert wird.

Weitere Vorteile der Erfindung sind in den nachfolgenden Ausführungsbeispielen beschrieben. Es zeigen:
- **Figur 1**: eine schematische Ansicht einer Fördereinheit,
- **Figur 2**: einen Querschnitt der Fördereinheit 1 mit zwei Seitenwänden 15, 16 und dazwischen angeordnetem Förderelement 2 und Textilmaterial 9,
- **Figur 3**: ein Ausführungsbeispiel gemäß der Erfindung mit zumindest einem Abdichtelement und zumindest einem Dachelement,
- **Figur 4**: ein Ausführungsbeispiel gemäß der Erfindung mit zumindest einem Abdichtelement und zumindest einem Dachelement,
- **Figur 5**: ein Ausführungsbeispiel gemäß der Erfindung mit zumindest einem Abdichtelement und zumindest einem Dachelement,
- **Figur 6**: ein Ausführungsbeispiel gemäß der Erfindung mit zumindest einem Abdichtelement und zumindest einem Dachelement,
- **Figur 7**: eine Seitenansicht des Förderelements mit geschlitztem Abdichtelement und
- **Figur 8**: eine perspektivische Ansicht des Förderelements als Nadelband.

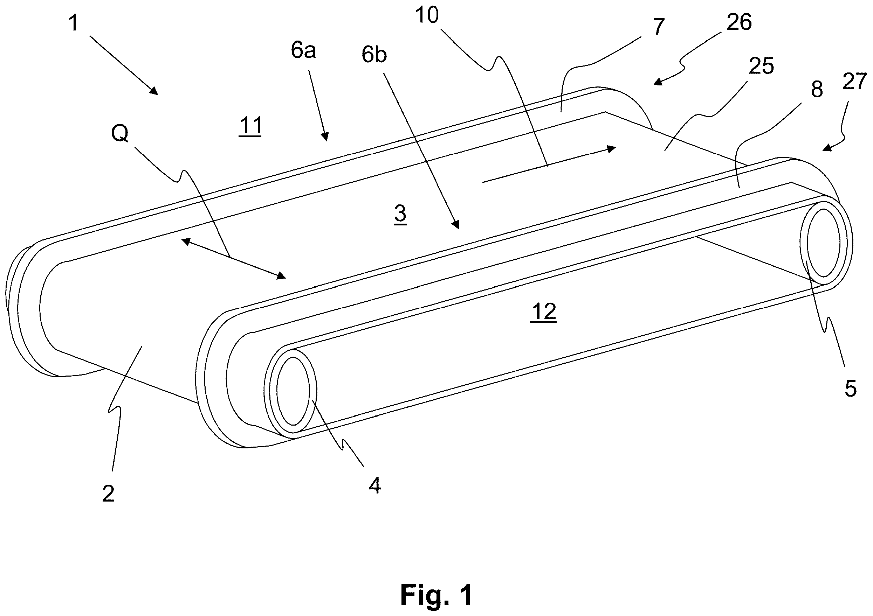

Figur 1 zeigt eine schematische Ansicht einer Fördereinheit 1 zum Fördern von Textilmaterial 9. Die Fördereinheit 1 weist gemäß dem vorliegenden Ausführungsbeispiel die Form eines Förderbandes auf. Das Textilmaterial 9 kann dabei Textilfasern umfassen, welche beispielsweise Natur-, Mineral-und/oder synthetische Fasern umfassen. Die Textilfasern können ferner Kurz- und/oder Langfasern umfassen. Vom Textilmaterial 9 kann ferner Staub mitgeführt werden oder beim Fördern des Textilmaterials 9 bildet sich Staub.

Die Fördereinheit 1 umfasst ein endlos umlaufendes und antreibbares Förderelement 2, das auf einer Außenseite 25 einen Förderbereich 3 aufweist, mittels dem das Textilmaterial 9 gefördert werden kann. Der Förderbereich 3 kann zusätzlich oder alternativ auch ein Auflagebereich sein, auf dem das Textilmaterial 9 aufliegen kann. Mit Hilfe des Förderelements 2 kann das Textilmaterial 9 in einer Förderrichtung 10 gefördert werden. Das Förderelement 2 wird dabei derart angetrieben, dass das Textilmaterial 9 in Förderrichtung 10 gefördert wird. Das Förderelement 2 umschließt ferner einen Innenraum 12.

Die Fördereinheit 1 umfasst gemäß dem vorliegenden Ausführungsbeispiel weiterhin zwei Umlenkeinheiten 4, 5, mittels denen das Förderelement 2 getragen und umgelenkt wird. Vorteilhafterweise kann zumindest eine der hier gezeigten beiden Umlenkeinheiten 4, 5, beispielsweise mittels einem Antrieb, insbesondere einem Elektromotor, angetrieben sein, um die Fördereinheit 1 anzutreiben. Die Umlenkeinheiten 4, 5 und/oder der hier nicht gezeigte Antrieb sind bzw. können im Innenraum 12 angeordnet sein.

Des Weiteren umfasst die Fördereinheit 1 zwei Abdichtvorrichtungen 6a, 6b, mittels der der Förderbereich 3 gegenüber dem Innenraum 12 und/oder einer Umgebung 11 abgedichtet werden kann. Mittels der Abdichtvorrichtungen 6a, 6b kann somit verhindert werden, dass das Textilmaterial 9 bzw. die Textilfasern oder entsprechender Staub vom Förderbereich 3 in den Innenraum 12 und/oder in die Umgebung 11 gelangt. Zumindest kann mittels den Abdichtvorrichtungen 6a, 6b die Ablagerung des Textilmaterials 9 vermindert werden. Durch die Ablagerung des Textilmaterials 9 im Bereich der Umlenkeinheiten 4, 5 oder dem Antrieb im Innenraum 12, kann die Funktionsfähigkeit der Fördereinheit 1 eingeschränkt werden. Beispielsweise kann es dabei zu einer erhöhten Reibung zwischen beweglichen Teilen kommen oder eine Kühlung des Antriebs kann vermindert werden. Des Weiteren kann sich das Textilmaterial 9 um die Umlenkeinheiten 4, 5 oder den Antrieb wickeln, was zu Schäden führen kann.

Zumindest eine Abdichtvorrichtung 6a, 6b umfasst zumindest ein Abdichtelement 7, 8, das sich von der Außenseite 25 des Förderelements 2 wegerstreckt, so dass es sich gegenüber dem Förderbereich 3 erhebt. Das zumindest eine Abdichtelement 7, 8 ist dabei mit dem Förderelement 2 verbunden, so dass sich bei Bewegung des Förderelements 2 das zumindest eine Abdichtelement 7, 8 mitbewegt. Das zumindest eine Abdichtelement 7, 8 erhebt sich ferner von der Außenseite 25 über den Förderbereich 3.

Das zumindest eine Abdichtelement 7, 8 ist in einem Seitenbereich 26, 27 des Förderelements 2 angeordnet. Ferner erstreckt sich das zumindest eine Abdichtelement 7, 8 vom Förderelement 2 weg. Außerdem erstreckt sich das zumindest eine Abdichtelement 7, 8 zumindest teilweise in Umfangsrichtung um das Förderelement 2.

Gemäß dem vorliegenden Ausführungsbeispiel weisen beide Abdichtvorrichtungen 6a, 6b jeweils ein Abdichtelement 7, 8 auf, wobei jeweils ein Abdichtelement 7, 8, in einem Seitenbereich 26, 27 angeordnet ist.

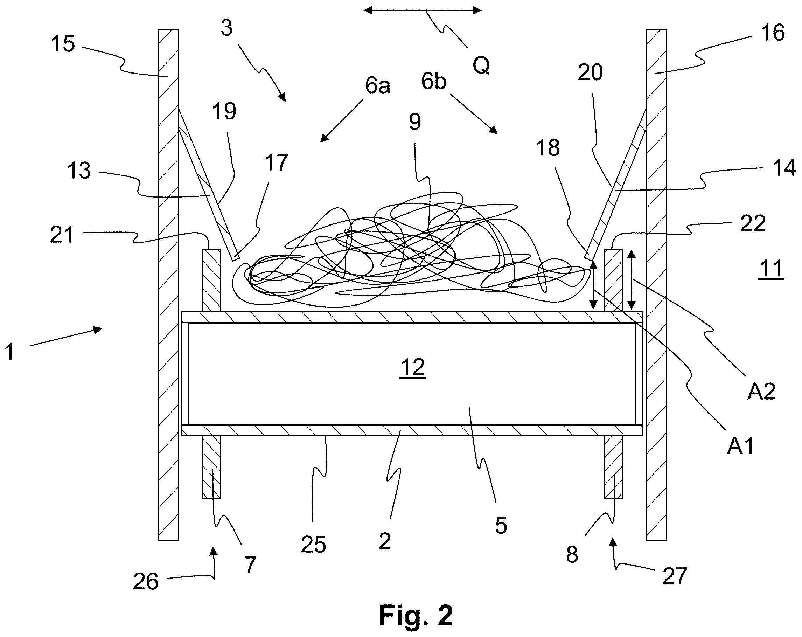

Figur 2 zeigt einen Querschnitt der Fördereinheit 1 mit zwei Seitenwänden 15, 16 und dazwischen angeordnetem Förderelement 2 und Textilmaterial 9. Das Textilmaterial 9 ist hier und auch in den folgenden Figuren als Knäuel gezeigt. Wie bereits beschrieben ist, kann das Textilmaterial 9 auch Textilfasern und/oder Staub umfassen.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmal gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in einer vorangegangenen Figur vorhanden sein.

Die beiden Seitenwände 15, 16 dienen dazu, um das Textilmaterial 9 in Querrichtung Q des Förderelements 2 im Förderbereich 3 zu halten. Wenn das Förderelement 2 das Textilmaterial 9 fördert, bewegt es sich gegenüber die feststehenden Seitenwände 15, 16. Die beiden Seitenwände 15, 16 bilden eine Abgrenzung gegenüber der Umgebung 11, da das Textilmaterial 9 dazu neigen kann, einen Faserflug auszubilden.

Hier sind wieder die beiden Abdichtvorrichtungen 6a, 6b gezeigt, wobei zumindest eine Abdichtvorrichtung 6a, 6b das zumindest eine Abdichtelement 7, 8 umfasst. Gemäß dem vorliegenden Ausführungsbeispiel weisen beide Abdichtvorrichtungen 6a, 6b zumindest ein Abdichtelement 7, 8 auf. Hier weist jede Abdichtvorrichtung 6a, 6b ein Abdichtelement 7, 8 auf. Mit Hilfe der beiden Abdichtelemente 7, 8 kann der Innenraum 12 zu beiden Seiten abgedichtet werden.

Gemäß dem vorliegenden Ausführungsbeispiel umfasst zumindest eine Abdichtvorrichtung 6a, 6b zumindest ein Dachelement 13, 14. Hier weisen beide Abdichtvorrichtungen 6a, 6b zumindest ein Dachelement 13, 14 auf. Hier weisen beide Abdichtvorrichtungen 6a, 6b ein Dachelement 13, 14 auf.

Das zumindest eine Dachelement 13, 14 ist an der entsprechenden Seitenwand 15, 16 angeordnet. Infolgedessen ist das zumindest eine Dachelement 13, 14 mit der entsprechenden Seitenwand 15, 16 fixiert bzw. gegen diese feststehend. Ferner bewegt sich das Förderelement 2 gegenüber dem zumindest einen Dachelement 13, 14, wenn es das Textilmaterial 9 fördert.

Das zumindest eine Dachelement 13, 14 deckt dabei ein freies Ende 21, 22 des zumindest einen Abdichtelements 7, 8 ab. Dadurch kann verhindert werden, dass das Textilmaterial 9, welches auf den Förderbereich 3 abgeworfen wird, auf das zumindest eine Abdichtelement 7, 8 gelangt. Infolgedessen wird es dem Textilmaterial 9 erschwert, in den Innenraum 12 zu gelangen.

Wie hier zu sehen ist, ist das zumindest eine Dachelement 13, 14 schräg in Richtung Förderbereich 3 angeordnet, so dass das abgeworfene Textilmaterial 9 über das zumindest eine Dachelement 13, 14 in Richtung Förderbereich 3 rutschen kann. Die hier gezeigten beiden Dachelemente 13, 14 bilden dabei eine Art Trichter.

Das zumindest eine Dachelement 13, 14 weist ferner zumindest eine Dachfläche 19, 20 auf, über die das Textilmaterial 9 zum Förderbereich 3 rutschen kann. Die zumindest eine Dachfläche 19, 20 kann beispielsweise beschichtet sein, um eine Reibung des Textilmaterials 9 beim Abrutschen zu verringern. Des Weiteren umfasst das zumindest ein Dachelement 13, 14 ein freies Dachende 17, 18, welches vom freien Ende 21, 22 des entsprechenden Abdichtelements 7, 8 in Querrichtung Q beabstandet ist. Das zumindest eine freie Dachende 17, 18 ist hier näher am Förderbereich 3 als das entsprechende freie Ende 21, 22 des Abdichtelements 7, 8. Das zumindest eine Dachelement 13, 14 überragt somit das zumindest eine Abdichtelement 7, 8, so dass das Textilmaterial 9 nur schwer in den Innenraum 12 gelangen kann. Das freie Dachende 17, 18 des zumindest einen Dachelements 13, 14 bildet somit auch eine Dach-, Abdichtkante oder eine Dachtraufe, die das zumindest eine Abdichtelement 7, 8 abdeckt und/oder überragt. Das Textilmaterial 9 rutscht somit über das freie Dachende 17, 18 bzw. die Dachkante, die Abdichtkante oder die Dachtraufe auf dem Förderbereich 3.

Weiterhin weist das zumindest eine freie Dachende 17, 18 einen ersten kürzesten Abstand A1 zum Förderelement 2 bzw. zur Außenseite 25 auf. Außerdem weist das zumindest eine freie Ende 21, 22 des zumindest einen Abdichtelements 7, 8 einen zweiten kürzesten Abstand A2 zum Förderelement 2 bzw. zur Außenseite 25 auf. Vorteilhaft ist es dabei, wenn der erste Abstand A1 geringer ist als der zweite Abstand A2, da damit die Abdichtung verbessert wird.

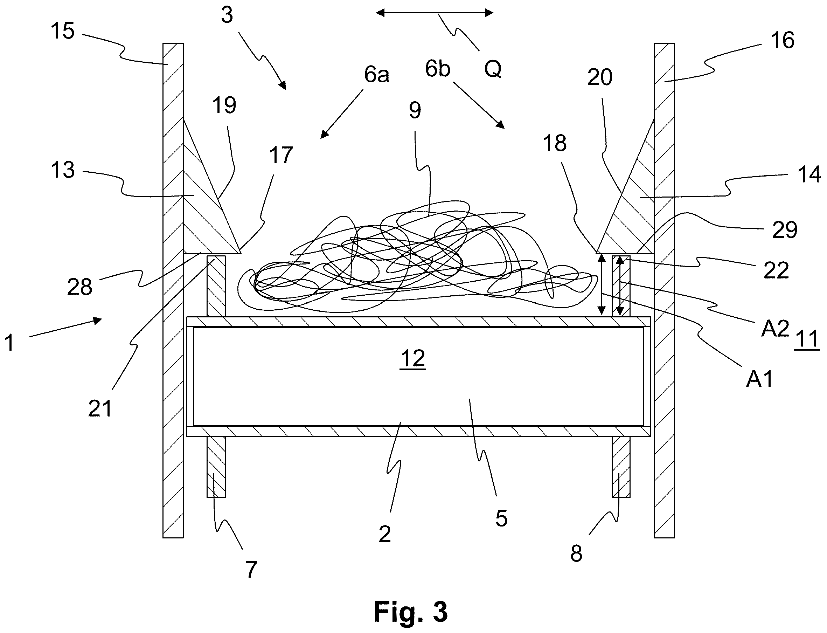

Figur 3 zeigt eine Ausführungsform der Erfindung mit dem zumindest einen Dachelement 13, 14. Das zumindest eine Dachelement 13, 14 weist zumindest eine Abdichtfläche 28, 29 auf, welche dem freien Ende 21, 22 des Abdichtelements 7, 8 gegenüberliegt bzw. zugewandt ist. Die zumindest eine Abdichtfläche 28, 29 und das freie Ende 21, 22 des Abdichtelements 7, 8 bilden zusammen eine Abdichtung, so dass der Innenraum 12 besser gegenüber dem Förderbereich 3 abgedichtet wird. Wie hier ferner zu sehen ist, sind die zumindest eine Abdichtfläche 28, 29 bzw. das zumindest eine Dachelement 13, 14 und das freie Ende 21, 22 des Abdichtelements 7, 8 voneinander beabstandet, so dass das zumindest eine Abdichtelement 7, 8 frei gegenüber dem zumindest einen Dachelement 13, 14 bewegt werden kann.

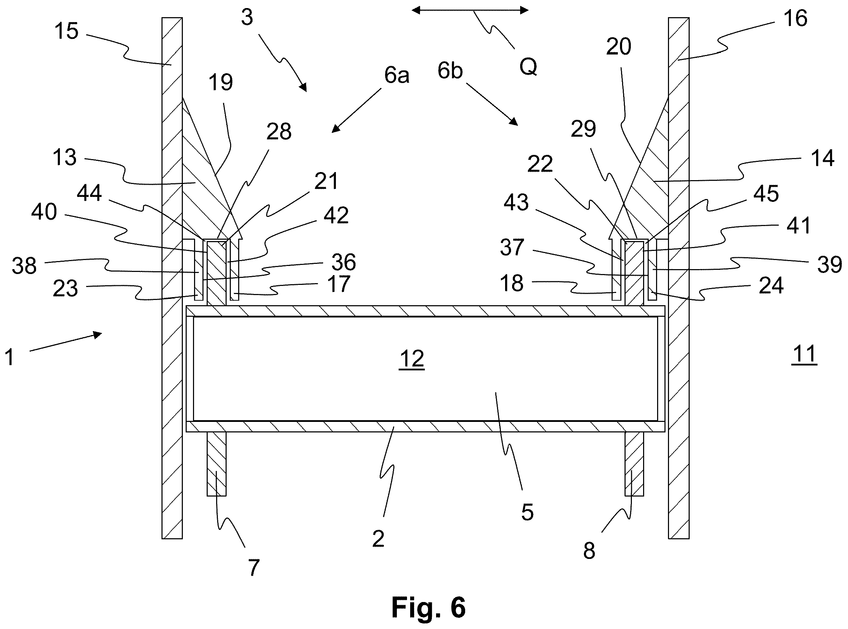

Des Weiteren sind hier die beiden Abstände A1, A2 gezeigt. Der erste Abstand A1 ist hier zumindest gleich groß wie der Abstand A2. Wenn zwischen dem zumindest einen Abdichtelement 7, 8 und dem entsprechenden zumindest einen Dachelement 13, 14 ein Spalt 42, 43 angeordnet ist, welcher in Figur 6 gezeigt ist, dann ist der erste Abstand A1 großer als der Abstand A2, nämlich beispielsweise um eine Größe des Spalts 42, 43.

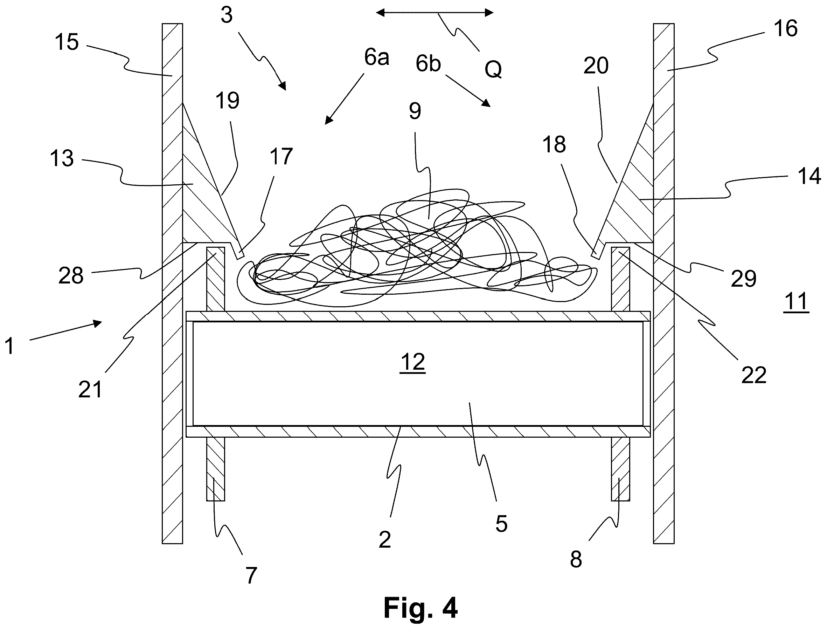

Figur 4 zeigt eine weitere Ausführungsform der Erfindung. Hier ragt das freie Dachende 17, 18 des zumindest einen Dachelements 13, 14 über die Abdichtfläche 28, 29 sowie über das freie Ende 21, 22 des Abdichtelements 7, 8 hinweg. Infolgedessen wird die Abdichtung verbessert.

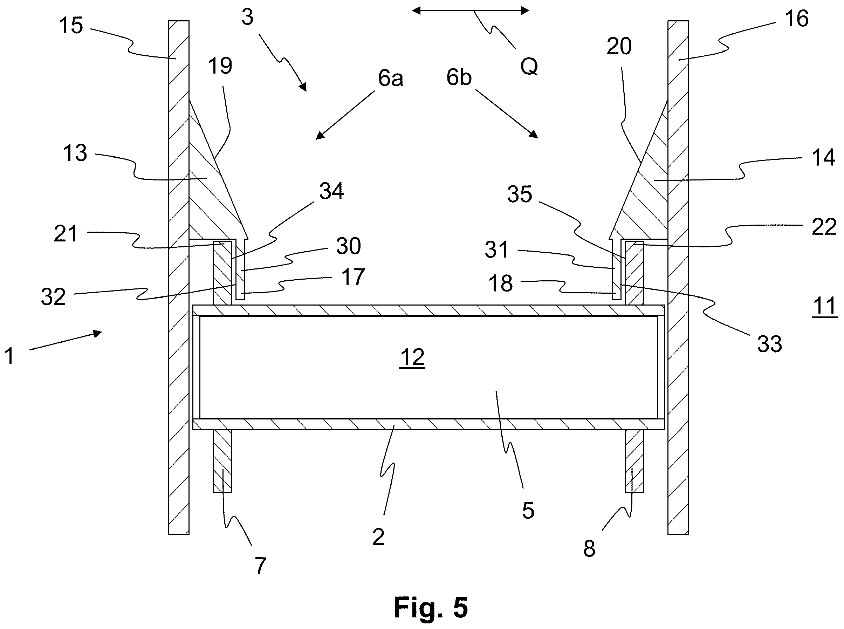

Figur 5 zeigt eine weitere Ausführungsform der Erfindung mit zum indest einem Dachelement 13, 14, das zumindest ein Gegenelement 30, 31 umfasst. Das Textilmaterial 9 wird ab hier der Übersichtlichkeit nicht mehr gezeigt.

Das zumindest eine Abdichtelement 7, 8 weist eine innere Seitenfläche 34, 35 auf. Der inneren Seitenfläche 34, 35 gegenüberliegend ist eine innere Gegenfläche 32, 33 angeordnet. Mittels der inneren Seitenfläche 34, 35 und der inneren Gegenfläche 32, 33 kann die Abdichtung verbessert werden. Um vom Förderbereich 3 zum Innenraum 12 zu gelangen, muss das Textilmaterial 9 zwischen der inneren Seitenfläche 34, 35 und der inneren Gegenfläche 32, 33 hindurch und über das zumindest eine Abdichtelement 7, 8 hinweg. Hier weist das innere Gegenelement 30, 31 die innere Gegenfläche 32, 33 auf, wobei das innere Gegenelement 30, 31 am zumindest einen Dachelement 13, 14 angeordnet ist und/oder mittels dem zumindest einen Dachelement 13, 14 ausgebildet ist. Ferner ist das freie Ende 21, 22 am inneren Gegenelement 30, 31 angeordnet.

Figur 6 zeigt eine weitere Ausführungsform der Erfindung. Das zumindest eine Dachelement 13, 14 weist hier zusätzlich oder alternativ zur inneren Gegenfläche 32, 33 und/oder zum inneren Gegenelement 30, 31 zumindest eine äußere Gegenfläche 36, 37 auf. Die innere Gegenfläche 32, 33 und/oder das innere Gegenelement 30, 31 sind hier nicht mehr mit einem Bezugszeichen versehen.

Die zumindest eine äußere Gegenfläche 36, 37 ist dabei einer äußeren Seitenfläche 40, 41 gegenüberliegend bzw. zugewandt angeordnet. Die zumindest eine äußere Gegenfläche 36, 37 und die entsprechende äußere Seitenfläche 40, 41 bilden zusammen ebenfalls eine Abdichtung, so dass das Textilmaterial 3 nicht zwischen der zumindest eine äußeren Gegenfläche 36, 37 und der entsprechende äußeren Seitenfläche 40, 41 hindurch gelangen kann. Gemäß Figur 6 und auch gemäß zumindest einer der vorangegangenen Figuren bildet das zumindest eine Abdichtelement 7, 8 und das zumindest eine Gegenelement 30, 31, 38, 39 mit den entsprechenden Flächen 28, 29, 32 - 37, 40, 41 eine Labyrinthdichtung, so dass das Textilmaterial 3 so gut wie nicht in den Innenraum 12 gelangen kann.

Das zumindest eine Gegenelement 30, 31, 38, 39 kann ferner beispielsweise einteilig mit dem zumindest einen Dachelement 13, 14 ausgebildet sein. Beispielsweise kann das zumindest eine Gegenelement 30, 31, 38, 39 und/oder die Flächen 28, 29, 32 - 37, 40, 41 mittels einer Aussparung 44, 45 im zumindest einen Dachelement ausgebildet sein.

Des Weiteren weist gemäß dieser Figur 6 das zumindest eine äußere Gegenelement 38, 39 ebenfalls ein freies Dachende 23, 24 auf. Auch das freie Dachende 23, 24 des zumindest einen äußeren Gegenelements 38, 39 ist ebenfalls näher zur Fördereinheit 2 angeordnet als das freie Ende 21, 22 des Abdichtelements 7, 8.

Weiterhin ist zwischen dem zumindest einen Abdichtelement 7, 8 und dem zumindest einen Dachelement 13, 14 ein Spalt 42, 43 angeordnet. Mit Hilfe des Spalts 42, 43 ist das zumindest eine Abdichtelement 7, 8 vom zumindest eine Dachelement 13, 14 beabstandet, so dass sich das zumindest eine mit dem Förderelement 2 verbundene Abdichtelement 7, 8 frei gegenüber dem zumindest einen Dachelement 13, 14 bewegen kann. Dadurch ist ein Verschleiß verhindert.

Zwar sind die vorangegangenen Figuren zumeist derart beschrieben, dass zumindest ein Abdichtelement 7, 8 und/oder zumindest ein Dachelement 13, 14 vorhanden ist, jedoch ist es vorteilhaft, wenn, wie in den Figuren gezeigt ist, zumindest zwei Abdichtelemente 7, 8 und/oder zumindest zwei Dachelement 13, 14 vorhanden sind. Auch wenn weiterhin nicht darauf eingegangen wurde, so sind die freien Enden 21, 22 der beiden Abdichtelemente 7, 8 mit erstes und zweites freies Ende 21, 22 bezeichnet. Auch die weiteren Merkmale der Abdichtelemente 7, 8 und/oder der Dachelemente 13, 14 sind mit "erstes" und "zweites" bezeichnet. Weiterhin sind in den Figuren die beiden Abdichtvorrichtungen 6a, 6b zueinander gleich bzw. spiegelsymmetrisch ausgebildet. Alternativ kann jedoch auch eine der beiden Abdichtvorrichtung 6a, 6b anders ausgebildet sein, wenn beispielsweise eine der beiden Abdichtvorrichtungen 6a, 6b mehr Textilmaterial 9 ausgesetzt ist.

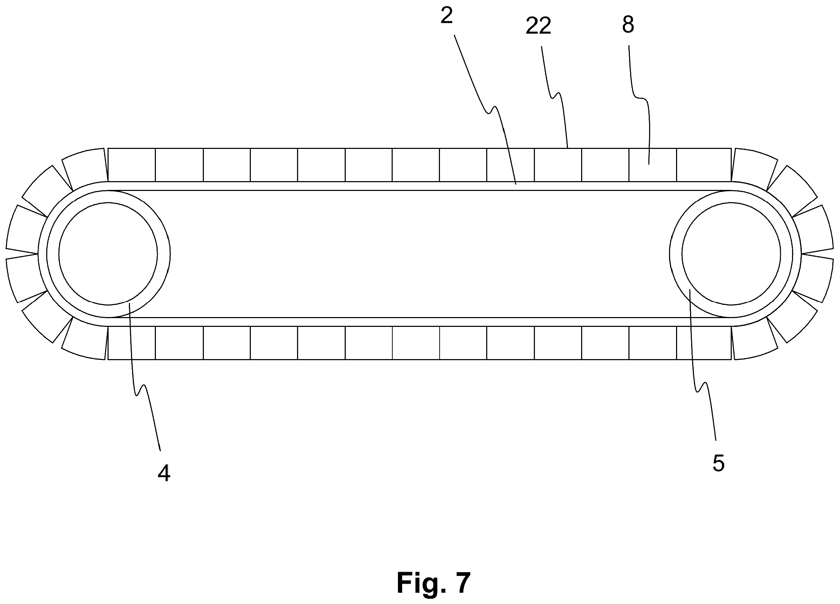

Figur 7 zeigt eine Seitenansicht des Förderelements 2 mit einem geschlitzten Abdichtelement 8. Vorteilhafterweise sind beide Abdichtelemente 7, 8 geschlitzt. Da das Abdichtelement 8 beim Umlenken durch die Umlenkeinheiten 4, 5 einen größeren Radius durchlaufen muss als das Förderelement 2, wird das Abdichtelement 8 beim Umlenken gestreckt. Desto höher sich das Abdichtelement 8 über das Förderelement 2 erstreckt, desto größer ist die Streckung. Um ein Einreißen des zumindest einen Abdichtelements 8 zu verhindern, ist es zumindest teilweise vom freien Ende 22 her geschlitzt, so dass sich das zumindest eine Abdichtelement 8 beim Umlenken aufspreizen kann. Gemäß dem vorliegenden Ausführungsbeispiel ist das Abdichtelement 8 vollständig, das heißt bis zum Förderelement 2, geschlitzt.

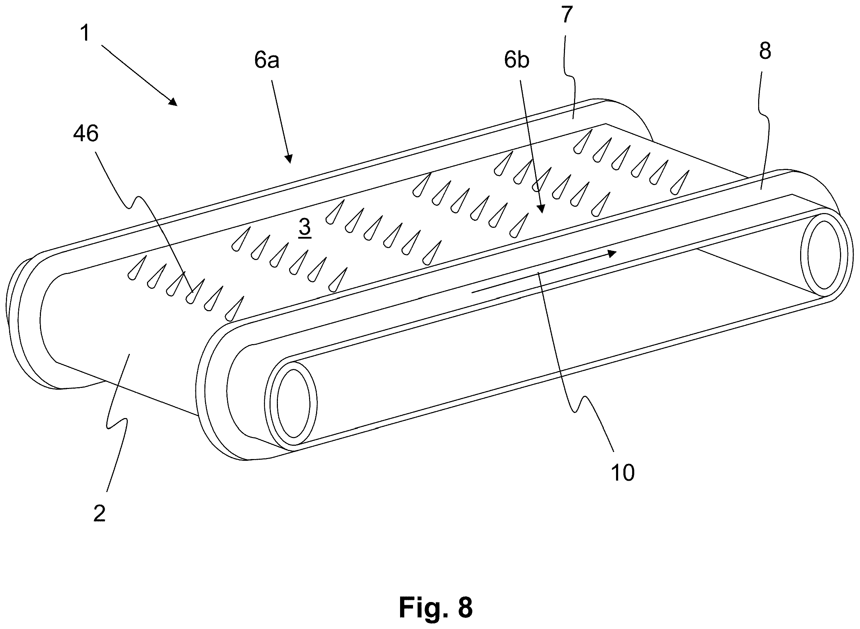

Figur 8 zeigt ein Ausführungsbeispiel des Förderelements 2, welches hier als Nadelband ausgebildet ist. Das Förderelement 2 weist eine Vielzahl an Zähnen 46 auf, welche im Förderbereich 3 angeordnet sind. Die Zähne 46 können auch Nadeln sein oder so bezeichnet werden. Die Zähne 46 sind mit dem Förderelement 2 verbunden. Beispielsweise können die Zähne 46 unmittelbar am Förderelement 2 angeordnet sein oder die Zähne 46 können an hier nicht gezeigten Leisten angeordnet sein, welche wiederum am Förderelement 2 angeordnet und/oder mit dem Förderelement 2 verbunden sind. Die Zähne 46 sind ferner schräg zur Förderrichtung 10 hin angeordnet. Mit Hilfe des Nadelbandes bzw. mit Hilfe der Zähne 46 kann ein hier nicht gezeigter Textilballen, zu dem das Textilmaterial 9 gepresst ist, aufgelöst werden. Die Zähne 46 reißen dabei das Textilmaterial 9 auseinander. Mit Hilfe der Zähne 46 kann außerdem das Textilmaterial 9 über eine Höhe, d.h. insbesondere nach oben, transportiert werden, da die Zähne 46 das Textilmaterial 9 gegenüber einem Hinunterrutschen festhalten.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Fördereinheit
- 2: Förderelement
- 3: Förderbereich
- 4: erste Umlenkeinheit
- 5: zweite Umlenkeinheit
- 6: Abdichtvorrichtung
- 7: erstes Abdichtelement
- 8: zweites Abdichtelement
- 9: Textilmaterial
- 10: Förderrichtung
- 11: Umgebung
- 12: Innenraum
- 13: erstes Dachelement
- 14: zweites Dachelement
- 15: erste Seitenwand
- 16: zweite Seitenwand
- 17: erstes freies Dachende
- 18: zweites freies Dachende
- 19: erste Dachfläche
- 20: zweite Dachfläche
- 21: erstes freies Ende
- 22: zweites freies Ende
- 23: drittes freies Dachende
- 24: viertes freies Dachende
- 25: Außenseite
- 26: erster Seitenbereich
- 27: zweiter Seitenbereich
- 28: erste Abdichtfläche
- 29: zweite Abdichtfläche
- 30: erstes inneres Gegenelement
- 31: zweites inneres Gegenelement
- 32: erste innere Gegenfläche
- 33: zweite innere Gegenfläche
- 34: erste innere Seitenfläche
- 35: zweite innere Seitenfläche
- 36: erste äußere Gegenfläche
- 37: zweite äußere Gegenfläche
- 38: erstes äußeres Gegenelement
- 39: zweites äußeres Gegenelement
- 40: erste äußere Seitenfläche
- 41: zweite äußere Seitenfläche
- 42: erster Spalt
- 43: zweites Spalt
- 44: erste Aussparung
- 45: zweite Aussparung
- 46: Zähne

- Q: Querrichtung
- A1: erster Abstand
- A2: zweiter Abstand

## Patentansprüche

1. Textilmaschine mit einer Fördereinheit (1) zum Fördern von Textilmaterial (9),
wobei die Fördereinheit (1) ein endlos umlaufendes und antreibbares Förderelement (2) umfasst, das an seiner Außenseite (25) einen Förderbereich (3) zum Fördern des Textilmaterials (9) aufweist,
wobei die Fördereinheit (1) zwei Seitenwänden (15, 16) umfasst, um das Textilmaterial (9) in Querrichtung (Q) des Förderelements (2) im Förderbereich (3) zu halten, und
wobei die Fördereinheit (1) zwei Abdichtvorrichtungen (6a, 6b) umfasst, die jeweils zwischen einer der beiden Seitenwände (15, 16) und dem Förderelement (2) angeordnet sind, so dass ein vom Förderelement (2) umschlossener Innenraum (12) gegenüber dem Textilmaterial (9) abgedichtet ist,
wobei zumindest eine der Abdichtvorrichtungen (6a, 6b) ein mit dem Förderelement (2) verbundenes Abdichtelement (7, 8) umfasst, das sich von der Außenseite (25) des Förderelements (2) wegerstreckt, so dass es sich gegenüber dem Förderbereich (3) erhebt,
wobei die zumindest eine Abdichtvorrichtung (6a, 6b) ein der benachbarten Seitenwand (15, 16) zugeordnetes Dachelement (13, 14) aufweist, das ein freies Ende (21, 22) des Abdichtelements (7, 8) abdeckt, wobei das zumindest eine Dachelement (13, 14) an der Seitenwand (15, 16) angeordnet ist,
wobei sich das Dachelement (13, 14) von der Seitenwand (15, 16) ausgehend und schräg in Querrichtung (Q) des Förderelements (2) erstreckt,
wobei das zumindest eine Dachelement (13, 14) eine Dachfläche (19, 20) aufweist, die das Abdichtelement (7, 8) überdeckt, wobei die Dachfläche (19, 20) des Dachelements (13, 14) geneigt ist, so dass das auf das zumindest eine Dachelement (13, 14) abgeworfene Textilmaterial (9) in Richtung Förderbereich (3) rutschen kann,
wobei das zumindest eine Dachelement (13, 14) zumindest eine dem freien Ende (21, 22) des Abdichtelements (7, 8) gegenüber zugewandte Abdichtfläche (28, 29) aufweist, die zusammen mit dem Abdichtelement (7, 8) den Förderbereich (3) gegenüber dem Innenraum (12) abdichtet und **dadurch gekennzeichnet, dass** die zumindest eine Abdichtfläche (28, 29) und das freie Ende (21, 22) des Abdichtelements (7, 8) voneinander beabstandet sind, so dass das zumindest eine Abdichtelement (7, 8) frei gegenüber dem zumindest einen Dachelement (13, 14) bewegt werden kann.

2. Textilmaschine nach dem vorherigen Anspruch, **dadurch gekennzeichnet, dass** sich das zumindest eine Abdichtelement (7, 8) vom Förderelement (2) weg und/oder zumindest teilweise in Umfangsrichtung um das Förderelement (2) erstreckt und/oder
dass die Fördereinheit (1) zumindest zwei im Innenraum (12) angeordnete Umlenkelemente (4, 5) zum Tragen und Umlenken des Förderelements (2) und/oder einen Antrieb zum Antreiben des Förderelements (2) umfasst.

3. Textilmaschine nach dem vorherigen Anspruch 1, **dadurch gekennzeichnet, dass** das zumindest eine Dachelement (13, 14) einem Seitenbereich (26, 27) des Förderelements (2) zugeordnet ist, wobei das Dachelement (13, 14) das Abdichtelement (7, 8) zum Förderbereich hin, insbesondere in Querrichtung (Q), überragt.

4. Textilmaschine nach dem vorherigen Anspruch 1, **dadurch gekennzeichnet, dass** ein freies Dachende (17, 18, 23, 24) des zumindest einen Dachelements (13, 14), insbesondere in Querrichtung (Q), zum Abdichtelement (7, 8) beabstandet ist und/oder dass das Dachelement (13, 14) über dem Abdichtelement (7, 8) angeordnet ist.

5. Textilmaschine nach dem vorherigen Anspruch 4, **dadurch gekennzeichnet, dass** ein kürzester Abstand (A1) zwischen dem freien Dachende (17, 18, 23, 24) und dem Förderelement (2) geringer ist als ein kürzester Abstand (A2) zwischen dem freien Ende (21, 22) des Abdichtelements (7, 8) und dem Förderelement (2).

6. Textilmaschine nach einem oder mehreren der vorherigen Ansprüche 1 - 5, **dadurch gekennzeichnet, dass** das zumindest eine Dachelement (13, 14) zumindest eine Abdichtkante aufweist, die zusammen mit dem Abdichtelement (7, 8) den Förderbereich (3) gegenüber dem Innenraum (12) abdichtet.

7. Textilmaschine nach einem oder mehreren der vorherigen Ansprüche 1 - 6, **dadurch gekennzeichnet, dass** das zumindest eine Dachelement (13, 14) eine innere Gegenfläche (32, 33) aufweist, die einer dem Förderbereich (3) zugewandten inneren Seitenfläche (34, 35) des Abdichtelements (7, 8) gegenüber zugewandt ist, und/oder dass das zumindest eine Dachelement (13, 14) eine äußere Gegenfläche (36, 37) aufweist, die einer dem Förderbereich (3) abgewandten äußeren Seitenfläche (40, 41) des Abdichtelements (7, 8) gegenüber zugewandt ist.

8. Textilmaschine nach einem oder mehreren der vorherigen Ansprüche 1 - 7, **dadurch gekennzeichnet, dass** das zumindest eine Abdichtelement (7, 8) ein inneres und/oder ein äußeres Gegenelement (30, 31, 38, 39) aufweist, wobei das innere Gegenelement (30, 31) die innere Gegenfläche (32, 33) und/oder das äußere Gegenelement (38, 39) die äußere Gegenfläche (36, 37) umfasst.

9. Textilmaschine nach einem oder mehreren der vorherigen Ansprüche 1 - 8, **dadurch gekennzeichnet, dass** die Abdichtfläche (28, 29), die innere und/oder die äußere Gegenfläche (32, 33, 36, 37) in einer Aussparung (44, 45) im zumindest einen Dachelement (13, 14) angeordnet sind und/oder
dass das zumindest eine Abdichtelement (7, 8) und das zumindest eine Dachelement (13, 14) eine Labyrinthdichtung bilden.

10. Textilmaschine nach einem oder mehreren der vorherigen Ansprüche 1 - 9, **dadurch gekennzeichnet, dass** zwischen dem zumindest einen Abdichtelement (7, 8) und dem zumindest einen Dachelement (13, 14) ein Spalt (42, 43) angeordnet ist und/oder
dass das zumindest eine Abdichtelement (7, 8) und das zumindest eine Dachelemente (13, 14) zueinander beabstandet sind.

11. Textilmaschine nach einem oder mehreren der vorherigen Ansprüche 1 - 10, **dadurch gekennzeichnet, dass** das zumindest eine Abdichtelement (7, 8) zumindest teilweise, insbesondere vollständig, aus Richtung des freien Endes (21, 22) geschlitzt ist, wobei das zumindest eine Abdichtelement (7, 8) vorzugsweise in Querrichtung (Q) geschlitzt sind, und/oder
dass das zumindest eine Abdichtelement (7, 8) elastisch ausgebildet ist und/oder
dass das zumindest eine Abdichtelement (7, 8) einteilig mit dem Förderelement (2) ausgebildet oder, insbesondere kraft-, form- und/oder stoffschlüssig, mit dem Förderelement (2) verbunden ist und/oder dass das zumindest eine Abdichtelement (7, 8) als Erhebung und/oder als umlaufende Rippe ausgebildet ist.

12. Textilmaschine nach einem oder mehreren der vorherigen Ansprüche 1 - 11, **dadurch gekennzeichnet, dass** beide Abdichtvorrichtungen (6a, 6b) jeweils ein Abdichtelement (7, 8) aufweisen und/oder dass beide Abdichtvorrichtungen (6a, 6b) jeweils ein Dachelement (13, 14) aufweisen.

13. Textilmaschine nach einem oder mehreren der vorherigen Ansprüche 1 - 12, **dadurch gekennzeichnet, dass** das Förderelement (2) ein Fördergurt, eine Förderkette und/oder ein Gliederförderband ist und/oder dass das Förderelement (2) Bearbeitungselemente für das Textilmaterial (9), insbesondere Zähne zum Auflösen eines Textilballens, aufweist.

## Claims

1. Textile machine having a conveying unit (1) for conveying textile material (9),
wherein the conveying unit (1) comprises an endlessly circulating and drivable conveying element (2) which has, on its outer side (25), a conveying area (3) for conveying the textile material (9),
wherein the conveying unit (1) comprises two side walls (15, 16) in order to hold the textile material (9) in the conveying area (3) in the transverse direction (Q) of the conveying element (2), and
wherein the conveying unit (1) comprises two sealing devices (6a, 6b) which are each arranged between one of the two side walls (15, 16) and the conveying element (2), so that an interior space (12) enclosed by the conveying element (2) is sealed off from the textile material (9), wherein at least one of the sealing devices (6a, 6b) comprises a sealing element (7, 8) which is connected to the conveying element (2) and extends away from the outer side (25) of the conveying element (2), so that it rises with respect to the conveying area (3),
wherein the at least one sealing device (6a, 6b) has a roof element (13, 14) which is assigned to the adjacent side wall (15, 16) and covers a free end (21, 22) of the sealing element (7, 8), wherein the at least one roof element (13, 14) is arranged on the side wall (15, 16), wherein the roof element (13, 14) extends starting from the side wall (15, 16) and obliquely in the transverse direction (Q) of the conveying element (2),
wherein the at least one roof element (13, 14) has a roof surface (19, 20) which covers the sealing element (7, 8), wherein the roof surface (19, 20) of the roof element (13, 14) is inclined, so that the textile material (9) dropped onto the at least one roof element (13, 14) can slide in the direction of the conveying area (3),
wherein the at least one roof element (13, 14) has at least one sealing surface (28, 29) which faces opposite the free end (21, 22) of the sealing element (7, 8) and, together with the sealing element (7, 8), seals off the conveying area (3) from the interior space (12), and **characterized in that**
the at least one sealing surface (28, 29) and the free end (21, 22) of the sealing element (7, 8) are spaced apart from one another, so that the at least one sealing element (7, 8) can be moved freely with respect to the at least one roof element (13, 14).

2. Textile machine according to the preceding claim, **characterized in that** the at least one sealing element (7, 8) extends away from the conveying element (2) and/or at least partially in the circumferential direction around the conveying element (2), and/or
**in that** the conveying unit (1) comprises at least two deflection elements (4, 5) arranged in the interior space (12) for carrying and deflecting the conveying element (2) and/or a drive for driving the conveying element (2).

3. Textile machine according to the preceding claim 1, **characterized in that** the at least one roof element (13, 14) is assigned to a side area (26, 27) of the conveying element (2), wherein the roof element (13, 14) projects beyond the sealing element (7, 8) towards the conveying area, in particular in the transverse direction (Q).

4. Textile machine according to the preceding claim 1, **characterized in that** a free roof end (17, 18, 23, 24) of the at least one roof element (13, 14) is spaced apart from the sealing element (7, 8), in particular in the transverse direction (Q), and/or **in that** the roof element (13, 14) is arranged above the sealing element (7, 8).

5. Textile machine according to the preceding claim 4, **characterized in that** a shortest distance (A1) between the free roof end (17, 18, 23, 24) and the conveying element (2) is less than a shortest distance (A2) between the free end (21, 22) of the sealing element (7, 8) and the conveying element (2).

6. Textile machine according to one or more of the preceding claims 1-5, **characterized in that** the at least one roof element (13, 14) has at least one sealing edge which, together with the sealing element (7, 8), seals off the conveying area (3) from the interior space (12).

7. Textile machine according to one or more of the preceding claims 1-6, **characterized in that** the at least one roof element (13, 14) has an inner mating surface (32, 33) which faces opposite an inner side surface (34, 35) of the sealing element (7, 8) which faces the conveying area (3), and/or
**in that** the at least one roof element (13, 14) has an outer mating surface (36, 37) which faces opposite an outer side surface (40, 41) of the sealing element (7, 8) which faces away from the conveying area (3).

8. Textile machine according to one or more of the preceding claims 1-7, **characterized in that** the at least one sealing element (7, 8) has an inner and/or an outer mating element (30, 31, 38, 39), wherein the inner mating element (30, 31) comprises the inner mating surface (32, 33) and/or the outer mating element (38, 39) comprises the outer mating surface (36, 37).

9. Textile machine according to one or more of the preceding claims 1-8, **characterized in that** the sealing surface (28, 29), the inner and/or the outer mating surface (32, 33, 36, 37) are arranged in a recess (44, 45) in the at least one roof element (13, 14), and/or
**in that** the at least one sealing element (7, 8) and the at least one roof element (13, 14) form a labyrinth seal.

10. Textile machine according to one or more of the preceding claims 1-9, **characterized in that** a gap (42, 43) is arranged between the at least one sealing element (7, 8) and the at least one roof element (13, 14), and/or
**in that** the at least one sealing element (7, 8) and the at least one roof element (13, 14) are spaced apart from one another.

11. Textile machine according to one or more of the preceding claims 1-10, **characterized in that** the at least one sealing element (7, 8) is slotted at least partially, in particular completely, from the direction of the free end (21, 22), wherein the at least one sealing element (7, 8) is preferably slotted in the transverse direction (Q), and/or in that the at least one sealing element (7, 8) is of elastic design, and/or
**in that** the at least one sealing element (7, 8) is formed in one piece with the conveying element (2) or is connected, in particular in a force-fitting, form-fitting and/or integrally bonded manner, to the conveying element (2), and/or **in that** the at least one sealing element (7, 8) is formed as an elevation and/or as a circumferential rib.

12. Textile machine according to one or more of the preceding claims 1-11, **characterized in that** both sealing devices (6a, 6b) each have a sealing element (7, 8), and/or
**in that** both sealing devices (6a, 6b) each have a roof element (13, 14).

13. Textile machine according to one or more of the preceding claims 1-12, **characterized in that** the conveying element (2) is a conveyor belt, a conveyor chain and/or a link conveyor belt, and/or **in that** the conveying element (2) has processing elements for the textile material (9), in particular teeth for opening up a textile bale.

## Revendications

1. Machine textile avec une unité de transport (1) pour transporter un matériau textile (9),
dans laquelle l'unité de transport (1) comprend un élément de transport (2) tournant sans fin et pouvant être entraîné, qui présente sur son côté extérieur (25) une zone de transport (3) pour transporter le matériau textile (9),
dans laquelle l'unité de transport (1) comprend deux parois latérales (15, 16) pour maintenir le matériau textile (9) dans la direction transversale (Q) de l'élément de transport (2) dans la zone de transport (3), et
dans laquelle l'unité de transport (1) comprend deux dispositifs d'étanchéité (6a, 6b), qui sont disposés à chaque fois entre l'une des deux parois latérales (15, 16) et l'élément de transport (2), de sorte qu'un espace intérieur (12) entouré par l'élément de transport (2) soit rendu étanche par rapport au matériau textile (9),
dans laquelle au moins l'un des dispositifs d'étanchéité (6a, 6b) comprend un élément d'étanchéité (7, 8) connecté à l'élément de transport (2), qui s'étend depuis le côté extérieur (25) de l'élément de transport (2) de sorte qu'il se soulève par rapport à la zone de transport (3), dans laquelle l'au moins un dispositif d'étanchéité (6a, 6b) présente un élément de toit (13, 14) associé à la paroi latérale adjacente (15, 16), qui recouvre une extrémité libre (21, 22) de l'élément d'étanchéité (7, 8), dans laquelle l'au moins un élément de toit (13, 14) est disposé sur la paroi latérale (15, 16),
dans laquelle l'élément de toit (13, 14) s'étend à partir de la paroi latérale (15, 16) et de manière oblique dans la direction transversale (Q) de l'élément de transport (2),
dans laquelle l'au moins un élément de toit (13, 14) présente une surface de toit (19, 20) qui recouvre l'élément d'étanchéité (7, 8), dans laquelle la surface de toit (19, 20) de l'élément de toit (13, 14) est inclinée de sorte que le matériau textile (9) éjecté sur l'au moins un élément de toit (13, 14) puisse glisser dans la direction de la zone de transport (3),
dans laquelle l'au moins un élément de toit (13, 14) présente au moins une surface d'étanchéité (28, 29) tournée à l'opposé de l'extrémité libre (21, 22) de l'élément d'étanchéité (7, 8), qui étanchéifie conjointement avec l'élément d'étanchéité (7, 8) la zone de transport (3) par rapport à l'espace intérieur (12) et
**caractérisée en ce que**
l'au moins une surface d'étanchéité (28, 29) et l'extrémité libre (21, 22) de l'élément d'étanchéité (7, 8) sont espacées l'une de l'autre de sorte que l'au moins un élément d'étanchéité (7, 8) puisse être déplacé librement par rapport à l'au moins un élément de toit (13, 14).

2. Machine textile selon la revendication précédente, **caractérisée en ce que** l'au moins un élément d'étanchéité (7, 8) s'étend à distance de l'élément de transport (2) et/ou au moins en partie dans la direction circonférentielle autour de l'élément de transport (2) et/ou en ce que l'unité de transport (1) comprend au moins deux éléments de déviation (4, 5) disposés dans l'espace intérieur (12) pour supporter et dévier l'élément de transport (2) et/ou un entraînement pour entraîner l'élément de transport (2).

3. Machine textile selon la revendication 1 précédente, **caractérisée en ce que** l'au moins un élément de toit (13, 14) est associé à une zone latérale (26, 27) de l'élément de transport (2), dans laquelle l'élément de toit (13, 14) dépasse de l'élément d'étanchéité (7, 8) vers la zone de transport, en particulier dans la direction transversale (Q).

4. Machine textile selon la revendication 1 précédente, **caractérisée en ce qu'**une extrémité de toit libre (17, 18, 23, 24) de l'au moins un élément de toit (13, 14), en particulier dans la direction transversale (Q), est espacée de l'élément d'étanchéité (7, 8) et/ou **en ce que** l'élément de toit (13, 14) est disposé au-dessus de l'élément d'étanchéité (7, 8).

5. Machine textile selon la revendication 4 précédente, caractérisée en ce qu'une distance la plus courte (A1) entre l'extrémité de toit libre (17, 18, 23, 24) et l'élément de transport (2) est inférieure à une distance la plus courte (A2) entre l'extrémité libre (21, 22) de l'élément d'étanchéité (7, 8) et l'élément de transport (2).

6. Machine textile selon l'une ou plusieurs des revendications 1 à 5 précédentes, **caractérisée en ce que** l'au moins un élément de toit (13, 14) présente au moins un bord d'étanchéité qui étanchéifie conjointement avec l'élément d'étanchéité (7, 8) la zone de transport (3) par rapport à l'espace intérieur (12).

7. Machine textile selon l'une ou plusieurs des revendications 1 à 6 précédentes, **caractérisée en ce que** l'au moins un élément de toit (13, 14) présente une contre-surface intérieure (32, 33) qui est tournée à l'opposé d'une surface latérale intérieure (34, 35) de l'élément d'étanchéité (7, 8) tournée vers la zone de transport (3) et/ou en ce que l'au moins un élément de toit (13, 14) présente une contre-surface extérieure (36, 37) qui est tournée à l'opposé d'une surface latérale extérieure (40, 41) de l'élément d'étanchéité (7, 8) opposée à la zone de transport (3).

8. Machine textile selon l'une ou plusieurs des revendications 1 à 7 précédentes, **caractérisée en ce que** l'au moins un élément d'étanchéité (7, 8) présente un contre-élément intérieur et/ou extérieur (30, 31, 38, 39), dans laquelle le contre-élément intérieur (30, 31) comprend la contre-surface intérieure (32, 33) et/ou le contre-élément extérieur (38, 39) comprend la contre-surface extérieure (36, 37).

9. Machine textile selon l'une ou plusieurs des revendications 1 à 8 précédentes, **caractérisée en ce que** la surface d'étanchéité (28, 29), la contre-surface intérieure et/ou extérieure (32, 33, 36, 37) sont disposées dans un évidement (44, 45) dans l'au moins un élément de toit (13, 14) et/ou
**en ce que** l'au moins un élément d'étanchéité (7, 8) et l'au moins un élément de toit (13, 14) forment un joint d'étanchéité à labyrinthe.

10. Machine textile selon l'une ou plusieurs des revendications 1 à 9 précédentes, **caractérisée en ce qu'**une fente (42, 43) est disposée entre l'au moins un élément d'étanchéité (7, 8) et l'au moins un élément de toit (13, 14) et/ou
**en ce que** l'au moins un élément d'étanchéité (7, 8) et l'au moins un élément de toit (13, 14) sont espacés l'un de l'autre.

11. Machine textile selon l'une ou plusieurs des revendications 1 à 10 précédentes, **caractérisée en ce que** l'au moins un élément d'étanchéité (7, 8) est fendu au moins en partie, en particulier complètement, à partir de la direction de l'extrémité libre (21, 22), dans laquelle l'au moins un élément d'étanchéité (7, 8) est fendu de préférence dans la direction transversale (Q), et/ou
**en ce que** l'au moins un élément d'étanchéité (7, 8) est réalisé de manière élastique et/ou
**en ce que** l'au moins un élément d'étanchéité (7, 8) est réalisé d'une seule pièce avec l'élément de transport (2) ou est connecté, en particulier par force, par complémentarité de forme et/ou de matière, à l'élément de transport (2) et/ou **en ce que** l'au moins un élément d'étanchéité (7, 8) est réalisé sous forme de rehaussement et/ou sous forme de nervure périphérique.

12. Machine textile selon l'une ou plusieurs des revendications 1 à 11 précédentes, **caractérisée en ce que** les deux dispositifs d'étanchéité (6a, 6b) présentent à chaque fois un élément d'étanchéité (7, 8) et/ou en ce que les deux dispositifs d'étanchéité (6a, 6b) présentent à chaque fois un élément de toit (13, 14).

13. Machine textile selon l'une ou plusieurs des revendications 1 à 12 précédentes, **caractérisée en ce que** l'élément de transport (2) est une bande transporteuse, une chaîne transporteuse et/ou une bande transporteuse à maillons et/ou
**en ce que** l'élément de transport (2) présente des éléments de traitement pour le matériau textile (9), en particulier des dents pour dissoudre une balle textile.
